# NEUE EUROPÄISCHE PATENTSCHRIFT

(11) **EP 0 909 535 B2**
(45) Veröffentlichungstag und Bekanntmachung des Hinweises auf die Entscheidung über den Einspruch: **06.06.2007**
(45) Hinweis auf die Patenterteilung: 15.01.2003
(21) Anmeldenummer: 98116731.5
(22) Anmeldetag: 03.09.1998
(51) Int. Cl.: A23G 1/20

(54) **Verfahren zur Herstellung geformter Schokoladenartikel**
Fabrication process for shaped chocolate articles
Procédé de fabrication d'articles de chocolat moulé

(30) Priorität: 26.09.1997 DE 19742434; 09.02.1998 DE 19805134
(43) Veröffentlichungstag der Anmeldung: 21.04.1999
(73) Patentinhaber: Bühler Bindler GmbH, 51702 Bergneustadt (DE)
(72) Erfinder: Bindler, Uwe, 51702 Bergneustadt (DE)
(74) Vertreter: Frommhold, Joachim

(56) Entgegenhaltungen:
- EP-A- 0 437 098
- EP-A- 0 449 782
- GB-A- 772 315
- GB-A- 1 527 240
- GB-A- 1 603 145
- GB-A- 2 070 501
- US-A- 4 314 799

## Beschreibung

Die Erfindung betrifft ein Verfahren zur Herstellung geformter Schokoladenartikel.

Verfahren zur Herstellung geformter Schokoladenartikel sind aus der Praxis bekannt. So beschreibt M.S. Jeffery in "Chocolate Clinic, Molding Technology" aus "The Manufacturing Confectioner, November 1987" ein Verfahren zur Herstellung massiver, geformter Schokoladenartikel. Nach diesem Verfahren wird die Schokolade zunächst durch Erhitzung in einen fließfähigen Zustand gebracht. Anschließend wird die Schokolade in Formen gefüllt und geschüttelt, um Luftbläschen zu entfernen und die Schokolade gleichmäßig zu verteilen. Zuletzt erfolgt eine Abkühlung in mehreren Schritten. Der Nachteil eines solchen Vorgehens besteht darin, daß zum Erreichen einer gleichmäßigen Schokolade ein relativ großer Aufwand betrieben werden muß, und daß abschließend eine langwierige Kühlung erforderlich ist.

In der Druckschrift EP 0 730 827 wird ein Verfahren zur Verarbeitung von im wesentlichen festen oder halbfesten fettenthaltenden Süßigkeiten beschrieben. Hier wird die fettenthaltende Süßigkeit bis zu einer bestimmten Temperatur erwärmt, so daß eine temporäre Flexibilität oder plastische Charakteristik der Süßigkeit erreicht wird. Die Süßigkeit wird dann in eine feste Form extrudiert, die bereits mit einem festen "Nahrungsmaterial" ausgekleidet ist. In diesem Fall ist kein Nachkühlen der zu verarbeiteten Süssigkeit notwendig. Das beschriebene Verfahren bezieht sich jedoch auf eine Doppelform, die im Anschluss an das Einfüllen der Süssigkeit zusammengeklappt wird, so dass von dem Endprodukt nur die feste Hülle, nicht aber die eingefüllte Süssigkeit zu sehen ist. Es ist also unerheblich, wenn die Stelle der geformten Süssigkeit, an der der Extruder die Süssigkeit zuführt, keinen glatten Abschluss hat.

In der Druckschrift GB-1 527 240 sowie in der Druckschrift GB 1 603 145 wird ein Verfahren zum Herstellen von Schokoladenartikeln beschrieben. Hierfür wird ein Schokoladengranulat, das durch Vermahlen fester Schokolade oder durch Extrusion von Schokolade gewonnen wurde, in eine Tablettenpresse gefüllt, in der es dann unter Druck zu einer bestimmten Form verpresst wird.

Ziel der Erfindung ist es, ein Verfahren bereit zu stellen, mit dem Schokoladeartikel beliebiger Form hergestellt werden können.

Erfindungsgemäss wird diese Aufgabe bei einem Verfahren zur Herstellung geformter Schokoladeartikel durch die folgenden Schritte gelöst:
a) ein einziges Schokoladestück, bei dem die Fettphase in einer definierten Form kristallisiert vorliegt, wird in temperiertem, festen Zustand in eine Pressform befördert; und
b) die Schokolade wird in einem Pressvorgang in eine durch die Pressform bestimmte Form gebracht.

Durch das erfindungsgemässe Verfahren wird ein stabiles Endprodukt grosser Gleichmässigkeit erreicht, ohne dass eine abschliessende Abkühlung der Schokolade nötig ist. Das Fliessen der temperierten aber noch festen Schokolade wird unter dem Druck des Pressvorgangs noch weiter verbessert. Ausserdem kann durch den Pressvorgang die Schokolade in eine beliebige, durch die Pressform bestimmte Form gebracht werden.

Vorteilhafterweise wird die Kristallisierung der Fettphase der Schokoladenstücke in einer definierten Form dadurch erreicht, daß dem erfindungsgemäßen Verfahren ein Schritt des Temperierens der flüssigen Phase der in die Preßform zu befördernden Schokolade sowie ein anschließender Abkühlvorgang vorgelagert wird.

Die in die Preßform beförderte Schokolade besteht aus einem einzigen Stück.

In einer bevorzugten Ausführung der Erfindung wird die feste Schokolade über einen Extruder geformt und zugeführt.

Des weiteren besteht in einer bevorzugten Ausführung die Preßform aus mindestens zwei Teilen, so daß eine Formgebung auf allen Seiten des Schokoladenartikels ermöglicht wird.

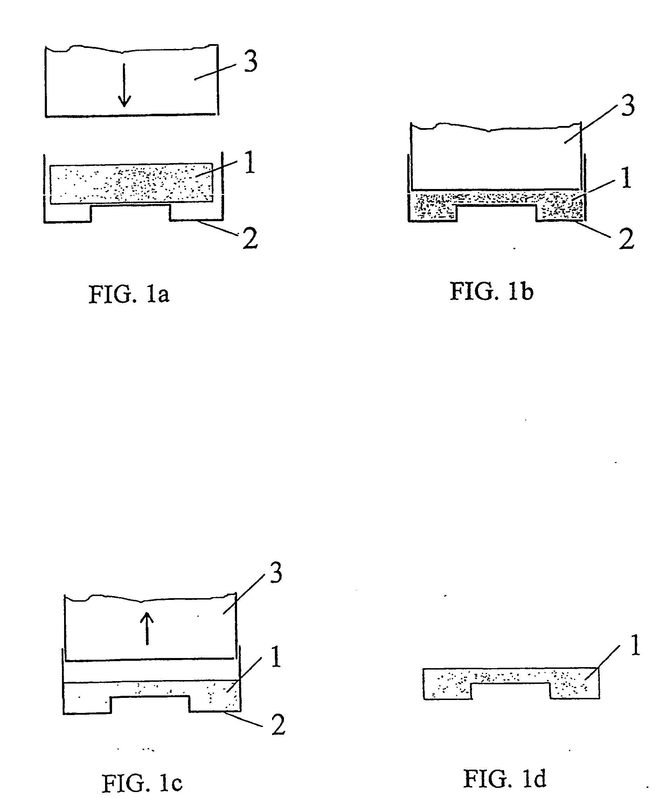

Im folgenden wird das erfindungsgemäße Verfahren anhand von Zeichnungen näher erläutert. Dabei zeigt die Fig. 1 mit den Teilfiguren 1a, 1b, 1c und 1d einen beispielhaften Ablauf des erfindungsgemäßen Verfahrens.

In Fig. 1a ist der Zustand des erfindungsgemäßen Verfahrens dargestellt, in dem ein festes Schokoladenstück 1 in eine Preßform 2 befördert wurde. Die Schokolade 1 wird nun durch nicht dargestellte Mittel temperiert. Oberhalb der Preßform 2 befindet sich ein Preßstempel 3, der in Richtung und Gegenrichtung des eingezeichneten Pfeils bewegbar ist.

Fig. 1b zeigt , wie der Preßstempel 3 das Schokoladenstück 1 in die Preßform 2 drückt, so daß die Schokolade die Form der Innenseite der Preßform annimmt.

In Fig. 1c ist der Preßvorgang beendet, und der Preßstempel 3 wird in Pfeilrichtung wieder zurückgefahren.

Schließlich zeigt Fig. 1d den nach dem erfindungsgemäßen Verfahren geformten Schokoladenartikel 1.

## Patentansprüche

1. Verfahren zur Herstellung geformter Schokoladeartikel, das die folgenden Schritte umfasst:
a) ein einziges Schokoladenstück (1), bei dem die Fettphase in einer definierten Form kristallisiert vorliegt, wird in temperiertem, festem Zustand in eine Pressform (2) befördert; und
b) die Schokolade wird in einem Pressvorgang in eine durch die Pressform (2) bestimmte Form gebracht.

2. Verfahren nach Anspruch 1, **dadurch gekennzeichnet, dass** ein weiterer Schritt vorgelagert wird, in dem durch Temperieren der flüssigen Phase der in die Pressform (2) zu befördernden Schokolade (1) sowie einen anschliessenden Abkühlvorgang das Kristallisieren der Fettphase der Schokolade in einer definierten Form erzielt wird.

3. Verfahren nach eine der Ansprüche 1 oder 2, **dadurch gekennzeichnet, dass** die feste Schokolade über einen Extruder geformt und zugeführt wird.

4. Verfahren nach einem der Ansprüche 1 bis 3, **dadurch gekennzeichnet, dass** zum Pressen der Schokoladeartikel eine Pressform verwendet wird, die aus mindestens zwei Teilen besteht.

## Claims

1. A procedure for manufacturing molded chocolate articles, comprising the following steps:
a) A single piece of chocolate (1) in which the fat phase crystallized into a defined shape is conveyed into a compression mold (2) in a heated, solid state, and
b) The chocolate is given a specific shape determined by the compression mold (2) in a compression molding procedure.

2. The procedure according to claim 1, **characterized in that** another step is performed beforehand, in which the fat phase of the chocolate is crystallized in a defined shape by heating the liquid phase of the chocolate (1) to be conveyed to the compression mold (2) and then cooling.

3. The procedure according to one of claims 1 or 2, **characterized in that** the solid chocolate is shaped and supplied via an extruder.

4. The procedure according to one of claims 1 to 3, **characterized in that** a compression mold comprised of at least two parts is used for compression molding the chocolate particles.

## Revendications

1. Procédé pour la fabrication de produits moulés en chocolat qui comprend les étapes suivantes :
a) un seul morceau de chocolat (1), dans lequel la phase lipidique se présente sous une forme cristallisée définie, est acheminé dans un moule de pressage (2) à l'état solide tempéré et
b) le chocolat est amené à une forme définie par le moule de pressage (2) en une opération de pressage.

2. Procédé selon la revendication 1, **caractérisé en ce qu'**une autre étape dans laquelle, par l'équilibrage de températures de la phase liquide du chocolat (1) à transporter dans le moule de pressage (2), ainsi que par une opération de refroidissement consécutive, on obtient la cristallisation de la phase lipidique du chocolat dans une forme définie est effectuée en amont.

3. Procédé selon l'une quelconque des revendications 1 ou 2, **caractérisé en ce que** le chocolat solide est moulé et acheminé par une extrudeuse.

4. Procédé selon l'une quelconque des revendications 1 à 3, **caractérisé en ce que** pour le pressage des produits en chocolat, on utilise un moule de pressage qui se compose d'au moins deux parties.
